# EUROPEAN PATENT APPLICATION

(11) **EP 4 610 113 A1**
(43) Date of publication of application: **03.09.2025**
(21) Application number: 25160907.9
(22) Date of filing: 28.02.2025
(51) Int. Cl.: B60R 11/04, B60J 3/00

(54) **IMPROVED SUNVISOR SYSTEM FOR A HEAVY VEHICLE**

(30) Priority: 01.03.2024 IT 202400004606
(71) Applicant: IVECO S.P.A., 10156 Torino (IT)
(72) Inventor: LIGA, Valerio, 10156 TORINO (IT); FRANCO, Gianluigi, 10156 TORINO (IT); MORANO, Ivan Vito Antonio, 10156 TORINO (IT); INGLESE, Davide, 10156 TORINO (IT)
(74) Representative: Studio Torta S.p.A.

(57) **Abstract**

Sunvisor (3) for a cabin (2) of a vehicle (1) extending along a longitudinal axis (A), the sunvisor (3) comprising a spoiler (4) configured to be fixed to the cabin (2), the sunvisor (3) comprising a plurality of sensor means (7, 8) carried by the spoiler (4).

## Description

### CROSS-REFERENCE TO RELATED APPLICATIONS

This patent application claims priority from Italian patent application no. 102024000004606 filed on March 1st 2024, the entire disclosure of which is incorporated herein by reference.

### TECHNICAL SECTOR

The present invention relates to a sunvisor, in particular a vehicular sunvisor.

The present invention finds its preferred, though not exclusive, application in a cabin of a heavy-duty vehicle, such as a truck. This application will be referred to below by way of example.

### STATE OF THE ART

Commercial vehicles, such as heavy-duty vehicles, for example trucks, include a cabin that can accommodate a driver's seat.

As is known, due to their dimension, the commercial vehicles include various blind spots that make their driving particularly difficult on very busy roads or in case of need for manoeuvres with little manoeuvring angle.

To this end, it is known to provide sensors in order to make it easier for the user to drive the vehicle. Such sensor systems are generally known as ADAS *"advanced driver-assistance system".*

Such sensors can also be used to provide different levels of autonomous driving, i.e. the detected data can be used by an electronic control unit to process control signals of the vehicle's driving systems.

These sensors are placed in different vehicular portions and this arrangement generates several drawbacks.

First of all, it is necessary to provide several housings along the vehicular perimeter and consequently wirings configured to connect these sensor means to the electronic unit are necessary.

In addition, the housing of the sensors on the vehicular perimeter exposes them to shocks and consequent damage that may cause them to break or wear out prematurely.

In addition, in case of maintenance, it is necessary to remove different vehicular parts with consequent loss of time and high costs.

It is therefore felt the need to improve the arrangement of the vehicular sensors in order to maintain the operation thereof, or to improve it if necessary, without however running into the problems set out above.

Aim of the present invention is to fulfil the above-described needs in an optimised and cost-effective manner.

### SUMMARY OF THE INVENTION

The aforesaid aim is achieved by a sunvisor and a vehicle as claimed in the appended claims forming an integral part of the present description.

### BRIEF DESCRIPTION OF THE DRAWINGS

For a better understanding of the present invention, a preferred embodiment is described below, by way of nonlimiting example and with reference to the accompanying drawings, wherein:
- Figure 1 is a perspective view of a vehicle equipped with a sunvisor according to the invention;
- Figure 2 is a side view of a portion of the vehicle of Figure 1; and
- Figure 3 is a partial perspective view of the sunvisor of the vehicle of Figure 1.

### DETAILED DESCRIPTION OF THE INVENTION

In the attached figures, 1 denotes a commercial type vehicle, in particular a heavy-duty vehicle, such as a truck. The vehicle 1 extends in particular along a longitudinal axis A and a transverse axis B and rises with respect to the ground along a vertical axis C.

In detail, the vehicle 1 comprises a cabin 2 defining a driving space (not shown) for a driver of the vehicle 1. As is known, the cabin 2 is defined by a plurality of walls connected to each other to define the aforementioned space facing a windscreen 2' forming part of the front wall of the cabin 2.

The vehicle 1 comprises a sunvisor 3 carried by at least one of the walls of the cabin 2. In particular, the sunvisor 3 is carried by a wall of the cabin 2 above the sunvisor 3 above the windscreen 2'.

In detail, the sunvisor 3 extends along the direction of the transverse axis B along the entire extension of the windscreen 2' and in particular on part of the side walls of the cabin 2, therefore along the longitudinal axis A.

Consequently, the sunvisor 3 comprises a spoiler 4 fixed to the cabin 2 as described below. In detail, the spoiler 3 comprises a transverse portion 4a extending along the transverse axis B and a pair of end portions 4b extending from ends of the transverse portion 4a and extending starting therefrom along the longitudinal axis A along side walls of the cabin 2.

Advantageously, the spoiler 4 is made in one single piece and of polymeric/plastic material.

In detail, the spoiler 4 has a concave cross section facing the cabin 2 and essentially C-shaped and defining an upper portion 4', a lower portion 4'' and an intermediate portion 4‴.

The upper and lower portions 4', 4'' extending in a plane defined by the longitudinal and transverse axes A, B and in particular spaced apart from each other along the vertical axis C and in further detail substantially parallel to each other.

The upper, lower and intermediate portions 4', 4", 4‴ are connected to each other, further by a closing wall 4c perpendicular to the longitudinal axis A.

The spoiler 4 thus delimits a space 6 delimited vertically by the upper and lower portions 4', 4'', axially by the intermediate portion 4‴ on one side and, in use, by the cabin 2 for the transverse portion 4a and by the closing wall 4c for the end portions 4b.

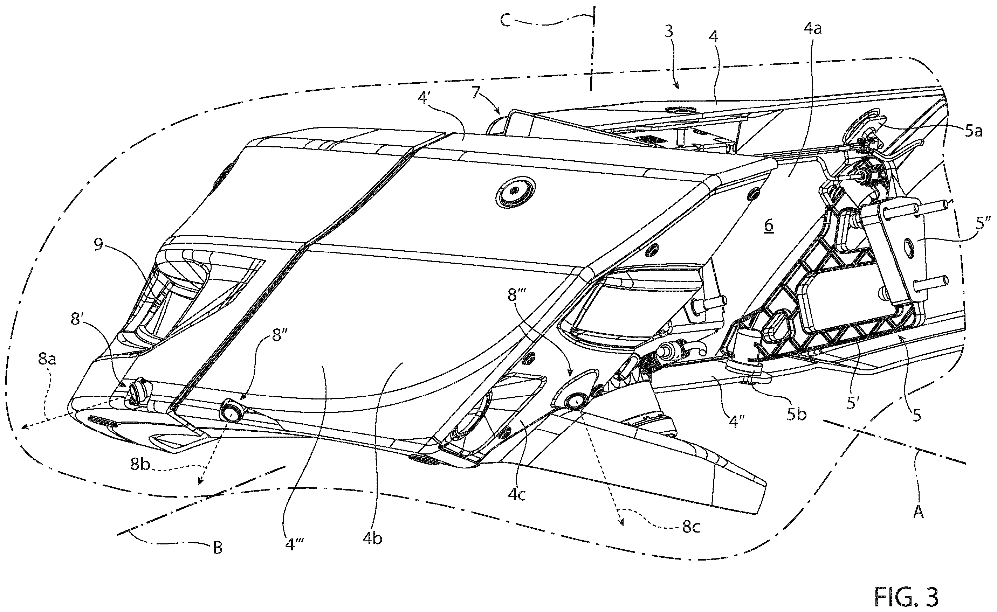

As best seen in Figure 3, the spoiler 3 is fixed on one of the walls of the cabin 2 thanks to a plurality of fixing brackets 5, housed in the space 6.

In detail, these fixing brackets 5 comprise a main portion 5', in the case shown, of substantially triangoloid shape and a coupling portion 5'' configured to fix the main portion 5' to the cabin 2.

The fixing bracket further comprises a pair of fixing portions 5a, 5b configured to connect the spoiler 4 to the main portion 5'.

In detail, in the embodiment described, the coupling portion 5'' comprises a portion defining a plurality of holes adapted to house fixing means (such as threaded elements) for fixing the main body 5' to the cabin 2 while the fixing portions 5a, 5b comprise respective housings suitable to house fixing means (such as threaded elements) for connecting the spoiler 4 to the main portion 5'.

In the embodiment shown, the main portion 5' has the shape of a right triangle and the coupling portion 5'' is placed on the minor cathetus while the two fixing portions 5a, 5b are placed in correspondence with the extreme vertices of the hypotenuse of the aforesaid right triangle.

As mentioned above, the spoiler 4 when fixed to the cabin 2 is placed so that the upper portion 4' is in contact with the cabin 2 while the lower portion 4'' extends cantilevered thanks to the intermediate portion 4''' with respect to the cabin 2. In this way, the spoiler 4 performs its function as a sunvisor, that is, it can provide shade within the driver's space as it protrudes longitudinally beyond the windscreen 2' .

According to the invention the sunvisor 3 comprises a plurality of sensors 7, 8 configured to provide data usable by an electronic control unit (not visible) of the vehicle 1 comprising processing means suitable for processing such data in order to:
- provide useful indications to the driver, for example through display on display means; and/or
- provide control signals to vehicle's operating systems to enable driving with a specific degree of autonomy.

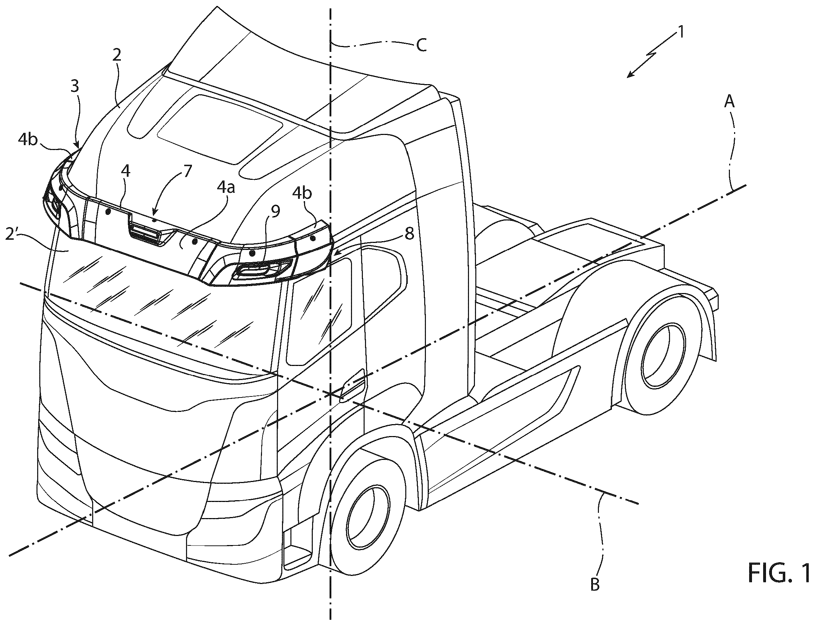

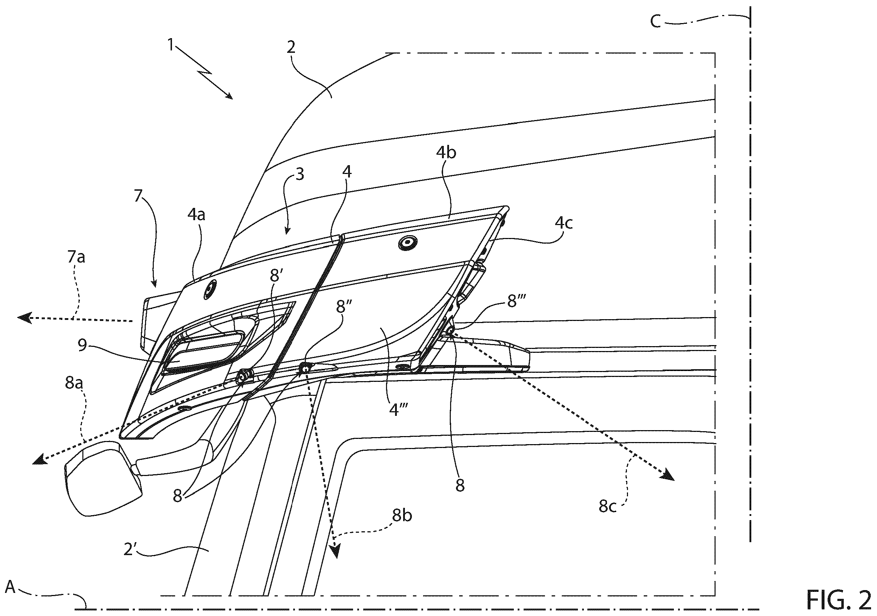

As best seen in Figures 1 and 2, the sunvisor 3 comprises first sensor means 7 carried by the transverse portion 4a and in particular substantially centred i.e. coaxial with the longitudinal axis A of the vehicle 1, in other words on a centre line of the transverse portion 4a.

In detail, the first sensor means 7 comprise distance sensor means configured to detect a longitudinal distance, i.e. along the longitudinal axis A, with respect to the vehicle 1. Consequently, the first sensor means have a field of vision 7a substantially open longitudinally in front of the vehicle 1.

Advantageously, the first sensor means 7 comprise LIDAR-type sensors.

The sunvisor 3 also comprises a plurality of second sensor means 8 suitable for detecting images in proximity to the cabin 2 and/or further distance values with respect to the cabin 2.

In particular, the sunvisor 3 comprises a pair of plurality of second sensor means 8 placed on sides opposite to the first sensor means 7 along the transverse axis B.

In detail, the second sensor means 8 comprise:
- At least one image acquisition sensor means 8', 8‴ configured to detect in a relative field of vision 8a, 8c; and
- A distance sensor means 8'' configured to detect a distance along the transverse axis B in a respective field of vision 8b.

In the embodiment shown the sunvisor 3 comprises a pair of image acquisition means 8', 8‴, in particular a first image acquisition means 8' configured to detect an image in a field of vision 8a directed along the longitudinal axis A in front of the cabin 2 and a second image acquisition means 8‴ configured to detect an image in a field of vision 8c directed along the longitudinal axis A behind the cabin 2.

In detail, the first image acquisition means 8' is carried at the end by the transverse portion 4a while the second image acquisition means 8''' is carried by the closing wall 4c.

Advantageously, the aforesaid image acquisition means 8', 8‴ comprise cameras or similar devices.

In the embodiment described, the distance sensor means 8" is carried by the end portion 4b and is configured to detect a distance along the transverse axis B. In detail, the distance sensor means 8" comprises a RADAR.

In particular, the first field of vision 7a has a longer focal length than the second fields of vision 8a, 8b, 8c.

Further, the first field of vision 7a originates at a higher point along the vertical axis than the second fields of vision 8a, 8b, 8c.

The sunvisor 3 further comprises lighting devices 9, such as headlights, housed in the spoiler 4. In particular, in the embodiment described, these lighting devices 9 are two, opposite each other with respect to the longitudinal axis A and placed adjacent to the end portions 4b.

The operation of the embodiment of the sunvisor and of the vehicle according to the invention described above is as follows.

When using the vehicle 1, the sunvisor 3 protects the driver sitting in the driving space from excessive sunlight. In addition, the sunvisor 3 supports the sensor means 7, 8 allowing to provide data that can be used by the driver him/herself, for example transmitted on screens placed in the driving space or used by an electronic control unit to process control signals in order to control the operating systems of the vehicle, such as a powertrain system and a steering system to allow automatic driving at various levels of autonomy.

From the foregoing, the advantages of a sunvisor and a vehicle according to the invention are evident.

The arrangement of the sensor means on the sunvisor makes it possible to optimise their fixing and their wiring. The solution is therefore particularly optimised and economical.

In addition, the placement of the sensors on the sunvisor allows to facilitate maintenance and replacement thereof, making maintenance more economical.

Furthermore, the elevated position on the sunvisor of the sensors makes them less prone to shocks, and consequent breakages, as well as dirt that would accumulate on them in positions closer to the ground.

Moreover, the elevated position allows to obtain longer focal lengths around the vehicle 1.

Furthermore, the fact that these sensors are provided on the sunvisor allows to obtain an optional sunvisor, applicable to the (optionally already existing) vehicles to provide or not ADAS functionality in addition to the sunvisor function.

Therefore, the sunvisor is provided as an optional "kit" to provide the aforesaid ADAS functions, allowing further optimisation during the production step of the vehicle.

In addition, the further integration of the lighting devices further makes the sunvisor 3 more versatile and easy to install.

Finally, it is clear that modifications and variants can be made to the sunvisor and the vehicle according to the present invention which, however, do not fall outside the scope of protection defined by the claims.

Clearly, the shape of the visor and the number and type of sensor means supported thereon may vary depending on the type and dimensions of the vehicle.

Similarly, its cross section and therefore the type and number of fixing brackets provided may vary.

## Claims

1. Sunvisor (3) for a cabin (2) of a vehicle (1) extending along a longitudinal axis (A), said sunvisor (3) comprising a spoiler (4) configured to be fixed to said cabin (2), said sunvisor (3) comprising a plurality of first sensor means comprising at least one distance sensor means (7) and second sensor means comprising at least one image acquisition means (8', 8‴), said first and second sensor means being carried by said spoiler (4),
wherein said first sensor means (7) have a respective field of vision (7a) and said second sensor means (8) have respective fields of vision (8a, 8b, 8c), the field of vision (7a) of said first sensor means (7) being vertically higher than the fields of vision (8a, 8b, 8c) of said second sensor means (8).

2. Sunvisor according to claim 1, wherein said spoiler (4) comprises a transverse portion (4a) extending transversely to said longitudinal axis (A) and a pair of end portions (4b) extending along said longitudinal axis (A) starting from ends of said transverse portion (4a), said sunvisor (3) comprising said first sensor means (7) carried by said transverse portion (4a) and said second sensor means (8) carried by said end portions (4b).

3. Sunvisor according to claim 2, wherein said distance sensor of said first sensor means (7) is configured to detect a distance in front of said cabin (2) along said longitudinal axis (A).

4. Sunvisor according to claim 2 or 3, wherein said first sensor means (7) comprise a LIDAR.

5. Sunvisor according to one of claims 2 to 4, wherein said first sensor means (7) are placed in correspondence with a centre line of said transverse portion (4a).

6. Sunvisor according to one of the preceding claims, wherein said second sensor means (7) comprise at least one image acquisition means (8', 8‴).

7. Sunvisor according to claim 6, wherein said second sensor means (8) comprise a first image acquisition means (8') for detecting an image in front of said cabin (2) along said longitudinal axis (A).

8. Sunvisor according to claim 6 or 7, wherein said second sensor means (8) comprise a second image acquisition means (8‴) for detecting an image behind said cabin (2) along said longitudinal axis (A).

9. Sunvisor according to one of claims 6 to 8, wherein said second sensor means (8) further comprise distance sensor means (8") suitable for detecting a distance transversely to the longitudinal axis (A) of said cabin (2).

10. Sunvisor according to claim 9, wherein said distance sensor means (8") comprise a RADAR.

11. Sunvisor according to one of the preceding claims, comprising lighting devices (9) carried by said spoiler (4).

12. Sunvisor according to one of the preceding claims, comprising a plurality of brackets (5) configured to define at least one fixing point (5a, 5b) for said spoiler (4) on said bracket (5) and at least one coupling portion (5') suitable to allow the connection of said bracket (5) to said cabin (2).

13. Vehicle (1) comprising a cabin (2) and a sunvisor (3) according to one of the preceding claims.

14. Vehicle according to claim 13, comprising an electronic control unit electrically connected to said sensor means (7, 8), said electronic control unit comprising processing means suitable for processing the data acquired by said sensor means (7, 8) and displaying said processing on display means.

15. Vehicle according to claim 13 or 14, comprising wherein said electronic control unit comprising processing means suitable for processing the data acquired by said sensor means (7, 8) and controlling operating systems of said vehicle (1) to allow at least partially autonomous driving of said vehicle (1).
